# EUROPEAN PATENT SPECIFICATION

(11) **EP 3 565 715 B1**
(45) Date of publication and mention of the grant of the patent: **05.08.2020**
(21) Application number: 17829965.7
(22) Date of filing: 20.12.2017
(51) Int. Cl.: B29D 30/56, B29D 30/68

(54) **PNEUMATIC TYRE COLD RETREADING METHOD AND PLANT**
VERFAHREN UND ANLAGE ZUR KALTRUNDERNEUERUNG VON LUFTREIFEN
PROCÉDÉ ET INSTALLATION DE RECHAPAGE À FROID DE PNEUMATIQUE

(30) Priority: 03.01.2017 IT 201700000473
(43) Date of publication of application: 13.11.2019
(73) Proprietor: Bridgestone Europe NV/SA, 1932 Zaventem (BE)
(72) Inventor: LELIO, Luca, 00128 Roma (IT)
(74) Representative: Marchetti, Alessio
(86) International application number: PCT/EP2017/083780
(87) International publication number: WO 2018/127416

(56) References cited:
- WO-A1-2015/030825
- DE-B- 1 105 146
- US-A- 2 362 967
- US-A- 3 850 222
- US-A- 3 904 459
- US-A- 4 080 230
- US-A- 4 096 008
- US-A- 4 149 926
- US-A- 4 234 370

## Description

### TECHNICAL SECTOR

The present invention relates to a pneumatic tyre cold retreading method and plant.

The present invention finds advantageous application in the field of *"truck"* pneumatic tyre retreading, to which the discussion that follows will make explicit reference without loss of generality.

### PRIOR ART

Traditionally, after first use *"truck"* pneumatic tyres are retreaded, i.e., they are provided with a new tread in place of the old worn tread which is removed beforehand. The retreading of a *"truck"* pneumatic tyre provides to eliminate the old worn tread mechanically from the used pneumatic tyre in order to expose the *"casing",* and subsequently applying a new tread to the casing. The application of a new tread to the casing provides winding about the same casing a *"tread strip";* the casing is then subjected to a vulcanization process in order to determine the optimum adhesion of the tread to the casing.

In the hot retreading process, the tread strip is green and without a pattern which is implemented during the vulcanization step in a vulcanization press provided with a mold having the required pattern. In the hot retreading process, the vulcanization takes place at high temperatures (around 150°C to 160°C) and high pressures (in the order of about 1.4-1.6 MPa (14-16 bar)) which are needed to make the rubber fluid enough to flow into the mold in order to form the pattern during vulcanization; the thermal and mechanical stresses to which the casing is subjected due to such high temperatures and pressures can however cause damage to the same casing.

In the cold retreading process, the tread strip (called *"PCT - Pre Cured Tread* - *strip"*) is pre-vulcanized and already provided with the pattern, and between the casing and the pre-vulcanized tread strip an intermediate strip or *"cushion",* having a bonding function, is interposed. In the cold retreading process, the vulcanization is only meant to vulcanize the intermediate strip in order to determine the optimal adhesion of the tread strip to the casing by means of the bonding action of the cushion (i.e., a pattern is not printed during vulcanization); as a result, in the cold retreading process, vulcanization takes place at lower temperatures (in the order of 100°C - 125°C), at lower pressures (in the order of 0.4-0.6 MPa (4-6 bar)), the casing is therefore subjected to lower thermal and mechanical stresses.

Generally, the hot retreading process provides for an average vulcanization period for each *"truck"* pneumatic tyre of about 1 hour, while the cold retreading process provides for an average vulcanization period for each *"truck"* pneumatic tyre of about 4 hours.

In the cold retreading process and to ensure adequate adhesion of the tread strip to the casing (with the interposition of the intermediate green rubber strip), it is necessary during vulcanization to apply a radial thrust that compresses the tread strip against the casing. In known retreading plants, such a radial thrust is obtained by inserting the pneumatic tyre in an autoclave within which an overpressure (in the order of 0.6 MPa (6 bar)), in relation to atmospheric pressure, is implemented and by inserting the pneumatic tyre into a flexible *"envelope"* within which a vacuum is initially created and which is subsequently inflated with air to a pressure of about 0.45 Mpa (4.5 bar); the difference in pressure (normally called *"DPC"*), which is maintained during the vulcanization cycle, results in the generation of a pneumatic thrust that compresses the tread strip against the casing.

The use of the autoclave and the envelope, wherein the *"DPC"* pressure differential is applied, the vacuum makes it possible to apply a uniform thrust to the entire tread strip both at the peaks of the blocks of the pattern and at the valleys of the pattern; the uniformity of the pneumatic thrust (which would never be mechanically feasible insofar as the valleys of the pattern cannot be reached due to the size, shape and number thereof) makes it possible to ensure optimal tread adhesion to the casing.

However, the use of the autoclave and the envelope has several drawbacks: firstly, in use, the autoclave exhibits an internal pressure that is considerably greater than atmospheric pressure and that therefore poses various problems as regards the safety of the operators of the plant; furthermore, applying the envelope to the pneumatic tyre is quite long and laborious, the envelope has a rather short working life (i.e., it must be replaced quite often), and the possible failure of the envelope during vulcanization (a frequent situation) forces the recommencement of the retreading process or, in some cases, even the scrapping of the pneumatic tyre.

The patent application WO2015030825A1 describes the retreading of a pneumatic tyre that provides winding about the retreaded casing a green rubber cushion and a tread strip without a pattern (and possibly pre-vulcanized), inserting the retreaded pneumatic tyre (i.e., the casing provided with the tread strip) into a flexible envelope within which a vacuum is initially created, arranging the retreaded pneumatic tyre contained within the enclosure within a vulcanizing autoclave in order to perform the vulcanization of at least the green rubber cushion, and finally engraving a pattern on the tread strip after the vulcanization of the retreaded pneumatic tyre.

### DESCRIPTION OF THE INVENTION

The object of the present invention is to provide a method and a plant for the cold retreading of a pneumatic tyre, which method and plant are free of the drawbacks described above and that, in particular, are of easy and economical implementation. According to the present invention, a method and a cold retreading plant for a pneumatic tyre are provided as set forth in the appended claims.

### BRIEF DESCRIPTION OF THE DRAWINGS

The present invention will now be described with reference to the appended drawings, showing a non-limiting exemplary embodiment, wherein:
- Figure 1 is a schematic view of a pneumatic tyre cold retreading plant implemented according to the present invention;
- Figures 2 and 3 are perspective views, and with parts removed for clarity, of part of the retreading plant of figure 1;
- Figure 4 is a plan view of part of the retreading plant of figure 1;
- Figure 5 is a front view of an application of the retreading plant of figure 1;
- Figure 6 is a perspective view of a vulcanization unit of a vulcanization station of the retreading plant of figure 1;
- Figure 7 is a front view of the vulcanization unit of figure 6; and
- Figure 8 is a front view of the vulcanization unit of figure 6 with the positioning highlighted of a pneumatic tyre to be vulcanized.

### PREFERRED EMBODIMENTS OF THE INVENTION

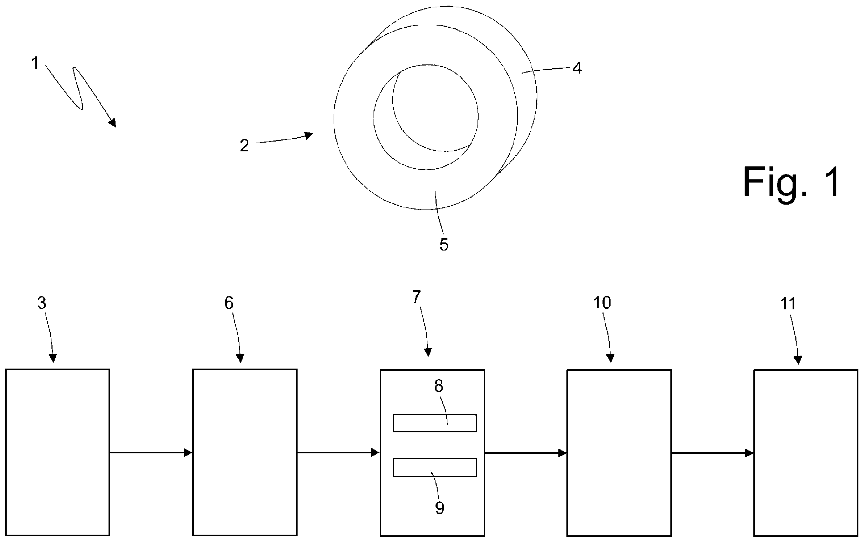

In figure 1, with the number 1, an entire *"truck"* pneumatic tyre 2 cold retreading plant is indicated.

The retreading plant 1 comprises a removal station 3, wherein the old worn tread (not shown) is mechanically removed from the pneumatic tyre 2, exposing an equatorial surface 4 of a casing 5 of the pneumatic tyre 2.

Furthermore the retreading plant 1 comprises a skiving station 6, wherein the equatorial surface 4 of the casing 5 is subjected to skiving in order to remove any local damage; the skiving operation results in the formation on the equatorial surface 4 of the casing 5 of craters of random and variable dimensions and positions which are subsequently filled with green rubber.

The retreading plant 1 comprises a winding station 7 whereto the casing 5 is transferred at the end of the filling; within the winding station 7, an intermediate strip or cushion 8 of green rubber and a pre-vulcanized tread strip 9 are wound about the casing 5 (one after the other). It is important to observe that the tread strip 9 has already been vulcanized in a special mold before being wound about the casing 5 but that it is also without a pattern, i.e., externally it is completely smooth.

The retreading plant 1 comprises a vulcanization station 10, wherein the retreaded pneumatic tyre 2 (i.e., provided with the tread strip 9) is subjected to a vulcanization process for vulcanizing the cushion 8 which is interposed between the casing 5 and the tread strip 9 thus resulting in optimal adhesion of the tread strip 9 to the casing 5 by means of the bonding action of the cushion 8. It is important to note that during the vulcanization process only the vulcanization of the tread strip 8 is performed, without printing any kind of pattern on the tread strip 9, which remains smooth.

Finally, the retreading plant 1 comprises an engraving station 11, wherein, upon the tread strip 9 (now fully integrated with the casing 5), the desired pattern is engraved by means of the action of at least one tool 12 which is moved by an actuator (more than one tool 12 could also be used, acting in succession or at the same time). Typically the tool 12 is a grinding wheel or milling cutter and implements the pattern on the tread strip 9 by means of mechanical removal.

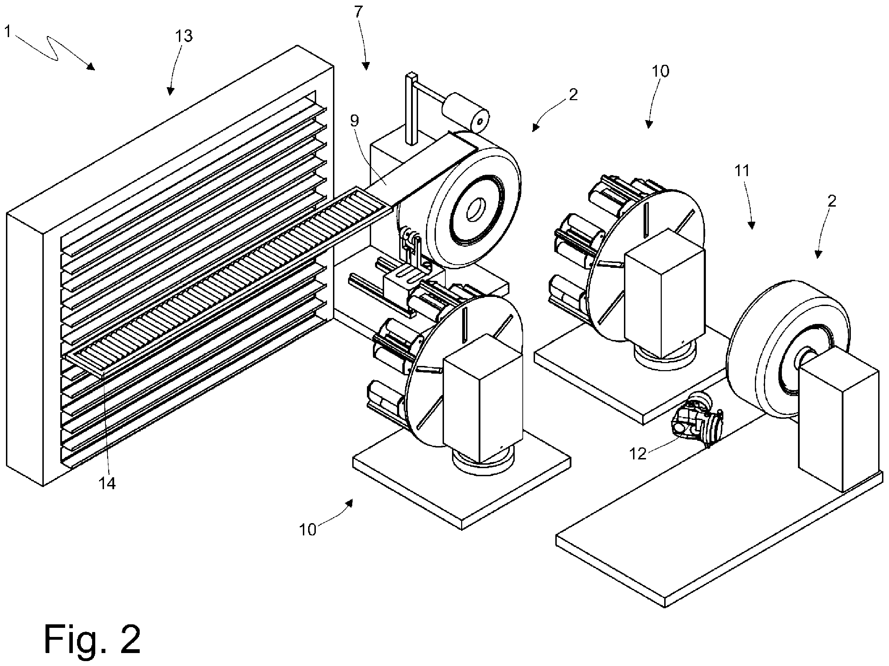

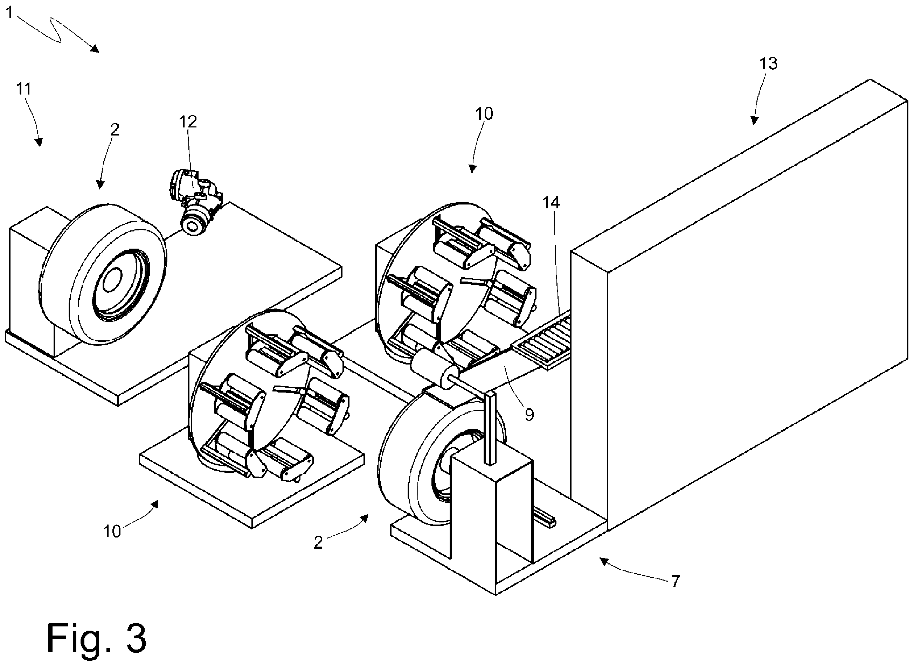

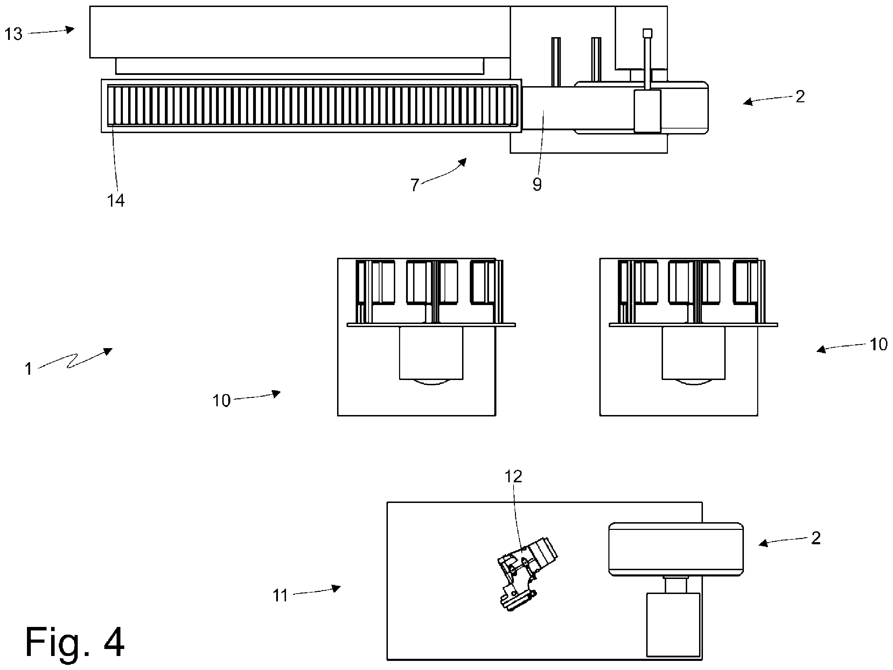

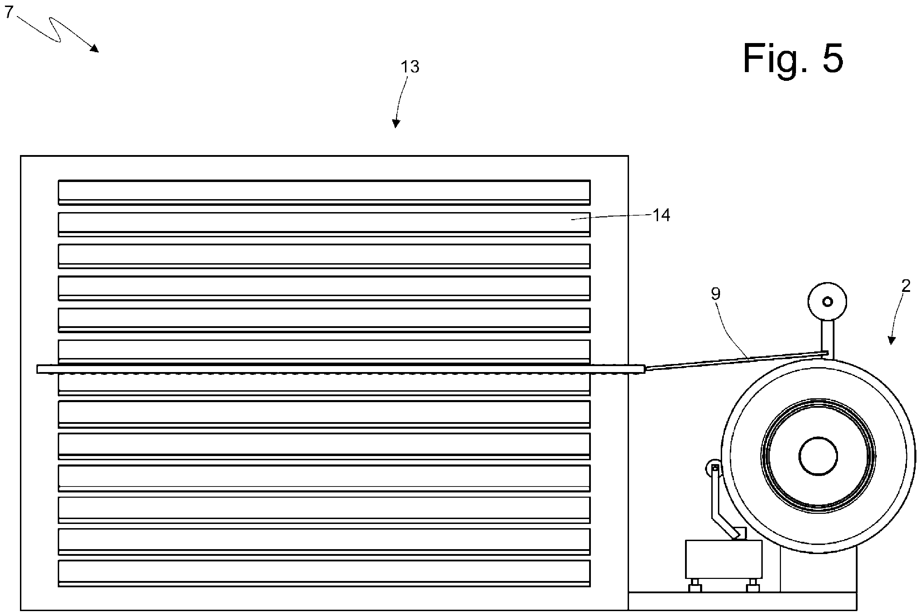

As shown in figures 2-5, the winding station 7 is basically of a known type and compared to a traditional winding station 7 differs only by the presence of a heating device 13 which is utilized in order to heat the tread strip 9 (that is pre-vulcanized) immediately before winding the tread strip 9 about the equatorial surface 4 of the casing 5. The heating of the tread strip 9 immediately before winding the tread strip 9 about the equatorial surface 4 of the casing 5 is performed such that the subsequent vulcanization of the green rubber cushion 8 takes place exploiting only the heat contained within the tread strip 9, i.e., during the vulcanization of the green rubber cushion 8 the pneumatic tyre 2 is not subjected to any external heating. According to a preferred embodiment, the tread strip 9 is heated to a temperature of between 90 and 120°C (generally around 100°C) immediately prior to winding the tread strip 9 about the equatorial surface 4 of the casing 5.

In the embodiment shown in the appended figures, the heating device 13 is shaped like an oven provided with a plurality of 14 drawers, each of which is suited to hold a corresponding tread strip 9 during the heating of the same tread strip 9. For example, the heating device 13 comprises electric thermo-resistances that elevate the temperature inside the heating device 13.

According to an alternative embodiment, the tread strip 9 can be vulcanized (while remaining smooth externally, i.e., without a pattern) immediately before winding the tread strip 9 about the equatorial surface 4 of the casing 5; in this way, the heat that is supplied to the tread strip 9, immediately before winding the tread strip 9 about the equatorial surface 4 of the casing 5, is primarily utilized to vulcanize the tread strip 9. In other words, the heating device 13 arranged within the winding station 7 implements the vulcanization of the tread strip 9.

According to a possible but optional and non-limiting embodiment, the green rubber cushion 8 is heated immediately before winding the green rubber cushion 8 about the equatorial surface 4 of the casing 5. By heating the green rubber cushion 8 immediately prior to winding the green rubber cushion 8 about the equatorial surface 4 of the casing 5, it is possible to accelerate and improve the subsequent vulcanization of the green rubber cushion 8, which takes place by exploiting the heat contained within the tread strip 9. According to a preferred embodiment, the green rubber cushion 8 is heated to a temperature of between 70 and 80°C immediately prior to winding the green rubber cushion 8 about the equatorial surface 4 of the casing 5 (the vulcanization of the green rubber begins at around 75°C). According to a possible embodiment, the green rubber cushion 8 is produced by means of an extruder device immediately prior to winding the green rubber cushion 8 about the equatorial surface 4 of the casing 5; in this way, the green rubber cushion 8 is hot due to the extrusion process (which provides to heat the rubber in order to extrude it) and therefore does not require any further heating. Alternatively, the green rubber cushion 8 is heated by means of a special heating device.

According to a possible but optional and non-binding embodiment, the equatorial surface 4 of the casing 5 is heated immediately before winding the green rubber cushion 8 about the equatorial surface 4 of the casing 5. By heating the equatorial surface 4 of the casing 5 immediately prior to winding the green rubber cushion 8 about the equatorial surface 4 of the casing 5, it is possible to accelerate and improve the subsequent vulcanization of the green rubber cushion 8 which takes place by exploiting the heat of the tread strip 9. For example, the equatorial surface 4 of the casing 5 could be heated by means of infrared lamps that are arranged near the equatorial surface 4 of the casing 5 within the winding station 7.

As shown in figures 2-5, the retreading plant 1 comprises two twin vulcanization stations 10 operating in parallel, insofar as the vulcanization operation of the green rubber cushion 8 is slower than the other operations (in fact there is only one winding station 7 and only one engraving station 11); as a guide, the green rubber cushion 8 vulcanization operation requires 12-18 minutes. According to other embodiments which are not shown, the retreading plant 1 could comprise a different number of twin vulcanization stations 10: generally (but not necessarily), the number of twin vulcanization stations 10 is between one and five.

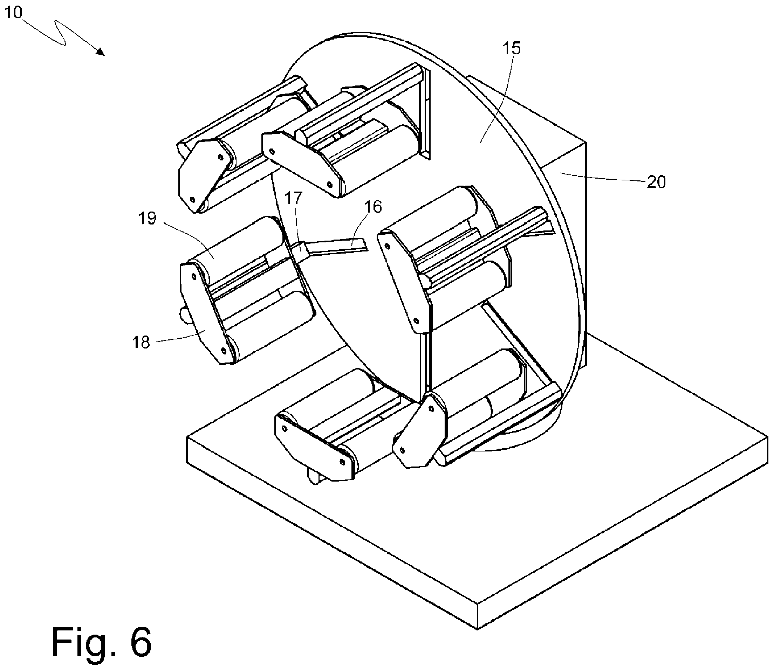

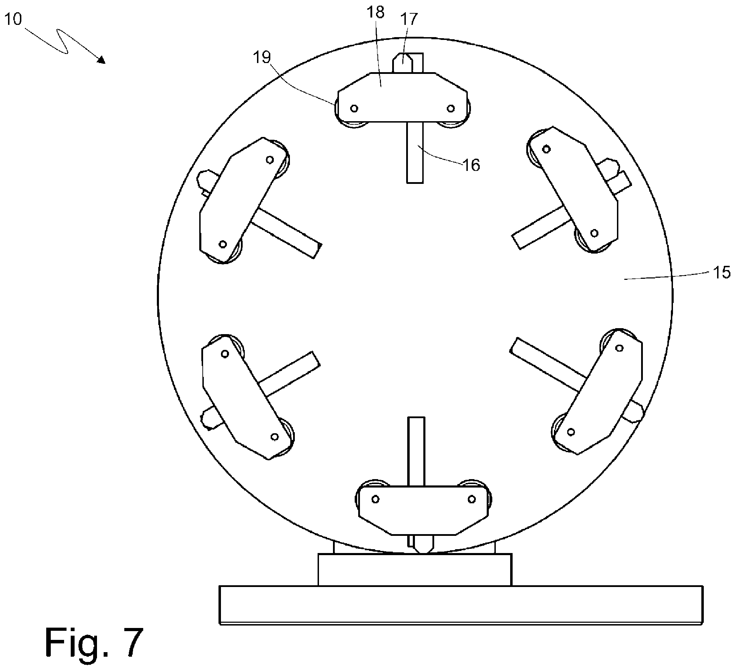

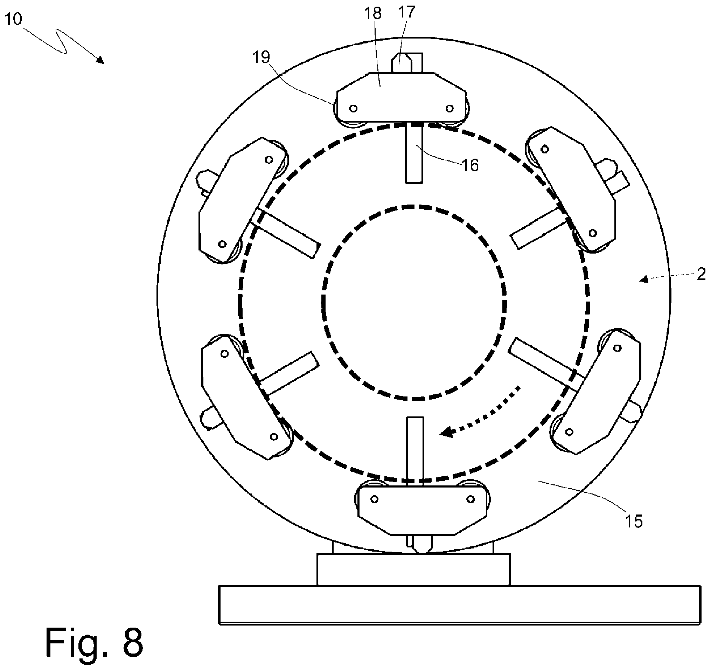

As shown in figures 6, 7 and 8, each vulcanization station 10 comprises a circular support body 15 provided with a plurality of radially directed linear guides 16; within each linear guide 16 there is a corresponding slide 17 which is mounted movable along the linear guide 16 and which supports a frame 18 upon which are mounted (generally loosely) two pressure rollers 19 arranged perpendicularly to the support body 15 (obviously a frame 18 could only house one pressure roller 19 or three pressure rollers 19). In use (as is well shown in figure 8), the pressure rollers 19 are oriented parallel to the pneumatic tyre 2, they are arranged all around the pneumatic tyre 2, and radially press against several parts of the same pneumatic tyre 2. Each vulcanization station 10 further comprises an actuator 20 that is suited to move the slides 17 along the respective linear guides 16 between an open position (utilized to supply a pneumatic tyre 2 to be vulcanized or to withdraw a vulcanized pneumatic tyre 2), wherein the pressure rollers 19 are relatively far from the pneumatic tyre 2, and a closed position (shown in figure 8 and utilized during the vulcanization process of a pneumatic tyre 2) wherein the pressure rollers 19 press against the pneumatic tyre 2 (i.e., against the tread strip 9 that is part of the pneumatic tyre 2).

According to a preferred embodiment, the actuator 20 is suited to apply a radial thrust to the pressure rollers 19 towards the center (i.e., a radial thrust that compresses the pneumatic tyre 2), of a calibrated and determined force, such that during the vulcanization process the pneumatic tyre 2 (i.e., the tread strip 9 that is part of the pneumatic tyre 2) is radially compressed at a desired pressure. By way of example, in order to radially push the pressure rollers 19, the actuator 20 could utilize a calibrated pneumatic or hydraulic pressure system, or else it could utilize a fully mechanical system equipped with calibrated springs.

According to a different embodiment which is not shown, within each vulcanization station 10 the pressure rollers 19 are replaced with clamps or other mechanical devices that, as they close, grip the pneumatic tyre 2.

During the vulcanization process, the pneumatic tyre 2 is maintained at ambient pressure and a radial pressure is mechanically applied to the tread strip 9 (which is part of the pneumatic tyre 2 and that constitutes the most external part of the same pneumatic tyre 2). In particular, during vulcanization, radial pressure is mechanically applied to the tread strip 9 (which is part of the pneumatic tyre 2 and that constitutes the most external part of the same pneumatic tyre 2) by means of a series of pressure rollers 19 that are arranged around the pneumatic tyre 2 and that are pushed, with a determined radial force, against the tread strip 9.

According to a preferred embodiment, at least one pressure roller 19 is motorized in order to rotate upon itself, and therefore to determine the (slow) rotation of the pneumatic tyre 2 during vulcanization; as a guide, the pneumatic tyre is rotated at a speed on the order of 1-5 mm/sec (or approximately 10-60 minutes are required for one complete revolution of the pneumatic tyre 2).

The engraving station 11 is of a known type and generally comprises a robotic arm that supports the tool 12.
The retreading plant 1 described above has numerous advantages.

Firstly, during the vulcanization process, the retreading plant 1 described above avoids the use of an autoclave (avoiding those safety issues that the use of an autoclave involves) and of vacuum envelopes (avoiding the complicated wrapping/unwrapping of the pneumatic tyre 2 and the risks of failure of the vacuum envelopes); this result is obtained by virtue of the fact that the tread strip 9 is perfectly smooth and it is therefore possible to mechanically apply uniform pressure to the tread strip 9 during the vulcanization process.

Furthermore, the retreading plant 1 described above is very flexible, insofar as engraving the pattern on the tread strip 9, by means of mechanical processing after the vulcanization process, makes it possible to implement an infinite number of different patterns without any structural changes to the same retreading plant 1 (i.e., without having to prepare new vulcanization molds for the tread strip 9).

The retreading plant 1 described above exhibits relatively high productivity (measured as the number of retreaded pneumatic tyres 2 per unit of time) insofar as the vulcanization process is particularly short: about 12-18 minutes are sufficient in order to completely vulcanize the cushion 8. This result is obtained insofar as heat is directly transmitted from the hot tread strip 9 to the cushion 8 (the tread strip 9 is in direct contact with the cushion 8), while in traditional autoclave vulcanization the heat inside the autoclave must first heat the tread strip 9 (arranged more externally) and then the heat is transferred from the tread strip 9 to the cushion 8.

The retreading plant 1 described above makes it possible to implement particularly uniform pneumatic tyres 2, insofar as by rotating (slowly) the pneumatic tyre 2 during vulcanization it is possible both to compensate for the effects of gravity (which tends to cause more rubber to accumulate towards the base, particularly when the rubber, being heated, becomes more viscous), and to result in beneficial *"massaging"* of the pneumatic tyre 2 by the pressure rollers 19.

In the retreading plant 1 described above, the tread strip 9 winding operation is greatly simplified, insofar as, given that the tread strip 9 is completely smooth, it is not necessary to apply any traction to the tread strip 9 (on the other hand, when the tread strip 9 has a pattern it is necessary to suitably stretch, by means of a particularly complex process, the tread strip 9 such as to make the pattern coincide with the two opposite ends of the tread strip 9 which then are connected to one another).

Finally, the retreading plant 1 described above is relatively simple and inexpensive to implement, insofar as it only utilizes simple implementation and operational components.

## Claims

1. Pneumatic tyre (2) cold retreading method; the cold retreading method comprises the steps of:
removing the old worn tread from the pneumatic tyre (2) in order to expose an equatorial surface (4) of the casing (5) of the pneumatic tyre (2);
skiving the equatorial surface (4) of the casing (5) in order to remove any local damage;
winding a green rubber cushion (8) and a pre-vulcanized tread strip (9) and without a pattern about the equatorial surface (4) of the casing (5);
vulcanizing the green rubber cushion (8) inserted within the pneumatic tyre (2) between the casing (5) and the tread strip (9); and
engraving a pattern on the tread strip (9) wound about the equatorial surface (4) of the casing (5) after the vulcanization of the pneumatic tyre (2);
the retreading method is **characterized in that,** during vulcanization, the pneumatic tyre (2) is maintained at ambient pressure and that radial pressure is mechanically applied to the tread strip (9).

2. Cold retreading method according to claim 1, wherein, during vulcanization, radial pressure is mechanically applied to the tread strip (9) by means of a series of pressure rollers (19) that are arranged around the pneumatic tyre (2) and that are pushed, with a determined radial force, against the tread strip (9).

3. Cold retreading method according to claim 2, wherein a vulcanization station, wherein the vulcanization of the green rubber cushion (8) takes places, comprises:
a circular support body (15) provided with a plurality of radially directed linear guides (16);
a plurality of slides (17), each of which supports at least one corresponding pressure roller (19) arranged perpendicularly to the support body (15) and which is mounted movable on a respective linear guide (16); and
an actuator (20) which is suited to move the slides (17) along the respective linear guides (16).

4. Cold retreading method according to claim 2 or 3, wherein at least one pressure roller (19) is motorized in order to rotate upon itself, and therefore to determine the rotation of the pneumatic tyre (2) during vulcanization.

5. Cold retreading method according to one of the claims from 1 to 4 and comprising the further step of heating the green rubber cushion (8) before winding the green rubber cushion (8) about the equatorial surface (4) of the casing (5) .

6. Cold retreading method according to claim 5, wherein the green rubber cushion (8) is produced by means of an extruder device before winding the green rubber cushion (8) about the equatorial surface (4) of the casing (5).

7. Cold retreading method according to claim 5 or 6, wherein the green rubber cushion (8) is heated to a temperature of between 70 and 80°C prior to winding the green rubber cushion (8) about the equatorial surface (4) of the casing (5).

8. Cold retreading method according to one of the claims from 1 to 7 and comprising the further step of heating the tread strip (9) before winding the tread strip (9) about the equatorial surface (4) of the casing (5).

9. Cold retreading method according to claim 8, wherein, the vulcanization of the green rubber cushion (8) takes place exploiting only the heat contained within the tread strip (9), i.e., during the vulcanization of the green rubber cushion (8) the pneumatic tyre (2) is not subjected to any external heating.

10. Cold retreading method according to claim 8 or 9, wherein the tread strip (9) is heated in a heating device (13) prior to winding the tread strip (9) about the equatorial surface (4) of the casing (5).

11. Cold retreading method according to claim 8, 9 or 10, wherein the tread strip (9) is heated to a temperature of between 90 and 120°C prior to winding the tread strip (9) about the equatorial surface (4) of the casing (5).

12. Cold retreading method according to one of the claims from 8 to 11 and comprising the further step of vulcanization the tread strip (9) before winding the tread strip (9) about the equatorial surface (4) of the casing (5).

13. Cold retreading method according to one of the claims from 1 to 12 and comprising the further step of heating the equatorial surface (4) of the casing (5) before winding the green rubber cushion (8) about the equatorial surface (4) of the casing (5).

14. Pneumatic tyre (2) cold retreading plant (1); the retreading plant (1) comprises:
a removing station (3) for removing the old worn tread strip from the pneumatic tyre (2) in order to expose an equatorial surface (4) of a casing (5) of the pneumatic tyre (2) ;
a skiving station (6) for skiving the equatorial surface (4) of the casing (5) in order to remove any local damage;
a winding station (7) for winding a green rubber cushion (8) and a pre-vulcanized tread strip (9) without a pattern about the equatorial surface (4) of the casing (5);
a vulcanizing station (10) for vulcanizing the green rubber cushion (8) inserted within the pneumatic tyre (2) between the casing (5) and the tread strip (9); and
an engraving station (11) for engraving a pattern on the tread strip (9) wound about the equatorial surface (4) of the casing (5) after the vulcanization of the pneumatic tyre (2);
the retreading plant (1) is **characterized in that:**
during vulcanization the vulcanization station (10) maintains the pneumatic tyre (2) at ambient pressure; and
the vulcanization station (10) comprises pressure means that, during vulcanization, mechanically apply radial pressure to the tread strip (9).

## Patentansprüche

1. Luftreifen (2)-Kaltrunderneuerungsverfahren; wobei das Kaltrunderneuerungsverfahren die folgenden Schritte umfasst:
Entfernen der alten abgenutzten Lauffläche von dem Luftreifen (2), um die Äquatorialoberfläche (4) der Karkasse (5) des Luftreifens (2) freizulegen;
Schälen der Äquatorialoberfläche (4) der Karkasse (5), um jegliche lokale Beschädigung zu entfernen;
Wickeln eines Gummidämpferrohlings (8) und eines vorvulkanisierten Laufflächenstreifens (9) und ohne ein Muster um die Äquatorialoberfläche (4) der Karkasse (5) herum;
Vulkanisieren des innerhalb des Luftreifens (2) zwischen der Karkasse (5) und dem Laufflächenstreifen (9) eingesetzten Gummidämpferrohlings (8); und
Gravieren eines Musters auf den Laufflächenstreifen (9), der um die Äquatorialoberfläche (4) der Karkasse (5) herum gewickelt ist, nach der Vulkanisation des Luftreifens (2);
wobei das Runderneuerungsverfahren **dadurch gekennzeichnet ist, dass** während der Vulkanisation der Luftreifen (2) auf Umgebungsdruck gehalten wird und dass mechanisch radialer Druck auf den Laufflächenstreifen (9) ausgeübt wird.

2. Kaltrunderneuerungsverfahren nach Anspruch 1, wobei während der Vulkanisation mechanisch radialer Druck auf den Laufflächenstreifen (9) mittels einer Reihe von Druckrollen (19) ausgeübt wird, die um den Luftreifen (2) herum angeordnet sind und die mit einer festgelegten Radialkraft gegen den Laufflächenstreifen (9) gedrückt werden.

3. Kaltrunderneuerungsverfahren nach Anspruch 2, wobei eine Vulkanisationsstation, in der die Vulkanisation des Gummidämpferrohlings (8) stattfindet, umfasst:
einen kreisförmigen Trägerkörper (15), der mit einer Vielzahl von radial gerichteten linearen Führungen (16) bereitgestellt ist;
eine Vielzahl von Schiebern (17), von denen jeder mindestens eine entsprechende senkrecht zu dem Trägerkörper (15) angeordnete Druckrolle (19) trägt, und die an einer jeweiligen linearen Führung (16) beweglich montiert ist; und
einen Aktuator (20), der geeignet ist, um die Schieber (17) entlang der jeweiligen linearen Führungen (16) zu bewegen.

4. Kaltrunderneuerungsverfahren nach Anspruch 2 oder 3, wobei mindestens eine Druckrolle (19) motorisiert ist, um um sich selbst zu rotieren, und damit die Rotation des Luftreifens (2) während der Vulkanisation festzulegen.

5. Kaltrunderneuerungsverfahren nach einem der Ansprüche von 1 bis 4 und umfassend den weiteren Schritt des Erwärmens des Gummidämpferrohlings (8) vor dem Wickeln des Gummidämpferrohlings (8) um die Äquatorialoberfläche (4) der Karkasse (5) herum.

6. Kaltrunderneuerungsverfahren nach Anspruch 5, wobei der Gummidämpferrohling (8) mittels einer Extrudervorrichtung vor dem Wickeln des Gummidämpferrohlings (8) um die Äquatorialoberfläche (4) der Karkasse (5) herum produziert wird.

7. Kaltrunderneuerungsverfahren nach Anspruch 5 oder 6, wobei der Gummidämpferrohling (8) vor dem Wickeln des Gummidämpferrohlings (8) um die Äquatorialoberfläche (4) der Karkasse (5) herum auf eine Temperatur zwischen 70 und 80 °C erwärmt wird.

8. Kaltrunderneuerungsverfahren nach einem der Ansprüche von 1 bis 7 und umfassend den weiteren Schritt des Erwärmens des Laufflächenstreifens (9) vor dem Wickeln des Laufflächenstreifens (9) um die Äquatorialoberfläche (4) der Karkasse (5) herum.

9. Kaltrunderneuerungsverfahren nach Anspruch 8, wobei die Vulkanisation des Gummidämpferrohlings (8) ausschließlich unter Ausnutzen der im Laufflächenstreifen (9) enthaltenen Wärme stattfindet, d. h. während der Vulkanisation des Gummidämpferrohlings (8) wird der Luftreifen (2) keinem externen Erwärmen unterzogen.

10. Kaltrunderneuerungsverfahren nach Anspruch 8 oder 9, wobei der Laufflächenstreifen (9) vor dem Wickeln des Laufflächenstreifens (9) um die Äquatorialoberfläche (4) der Karkasse (5) herum in einer Erwärmungsvorrichtung (13) erwärmt wird.

11. Kaltrunderneuerungsverfahren nach Anspruch 8, 9 oder 10, wobei der Laufflächenstreifen (9) vor dem Wickeln des Laufflächenstreifens (9) um die Äquatorialoberfläche (4) der Karkasse (5) herum auf eine Temperatur zwischen 90 und 120 °C erwärmt wird.

12. Kaltrunderneuerungsverfahren nach einem der Ansprüche von 8 bis 11 und umfassend den weiteren Schritt der Vulkanisation des Laufflächenstreifens (9) vor dem Wickeln des Laufflächenstreifens (9) um die Äquatorialoberfläche (4) der Karkasse (5) herum.

13. Kaltrunderneuerungsverfahren nach einem der Ansprüche von 1 bis 12 und umfassend den weiteren Schritt des Erwärmens der Äquatorialoberfläche (4) der Karkasse (5) vor dem Wickeln des Gummidämpferrohlings (8) um die Äquatorialoberfläche (4) der Karkasse (5) herum.

14. Luftreifen (2)-Kaltrunderneuerungsanlage (1); wobei die Runderneuerungsanlage (1) umfasst:
eine Entfernungsstation (3) zum Entfernen des alten abgenutzten Laufflächenstreifens von dem Luftreifen (2), um die Äquatorialoberfläche (4) der Karkasse (5) des Luftreifens (2) freizulegen;
eine Schälstation (6) zum Schälen der Äquatorialoberfläche (4) der Karkasse (5), um jegliche lokale Beschädigung zu entfernen;
eine Wickelstation (7) zum Wickeln eines Gummidämpferrohlings (8) und eines vorvulkanisierten Laufflächenstreifens (9) ohne ein Muster um die Äquatorialoberfläche (4) der Karkasse (5) herum;
eine Vulkanisierstation (10) zum Vulkanisieren des innerhalb des Luftreifens (2) zwischen der Karkasse (5) und dem Laufflächenstreifen (9) eingesetzten Gummidämpferrohlings (8); und
eine Gravierstation (11) zum Gravieren eines Musters auf den Laufflächenstreifen (9), der um die Äquatorialoberfläche (4) der Karkasse (5) herum gewickelt ist, nach der Vulkanisation des Luftreifens (2);
wobei die Runderneuerungsanlage (1) **dadurch gekennzeichnet ist, dass:**
die Vulkanisationsstation (10) während der Vulkanisation den Luftreifen (2) auf Umgebungsdruck hält; und
die Vulkanisationsstation (10) Druckmittel umfasst, die während der Vulkanisation mechanisch einen radialen Druck auf den Laufflächenstreifen (9) ausüben.

## Revendications

1. Procédé de rechapage à froid de pneumatique (2) ; le procédé de rechapage à froid comprend les étapes consistant à :
retirer l'ancienne bande de roulement usée du pneumatique (2) afin d'exposer une surface équatoriale (4) de la carcasse (5) du pneumatique (2) ;
écroûter la surface équatoriale (4) de la carcasse (5) afin d'éliminer tout dommage local ;
enrouler un coussin en caoutchouc cru (8) et une bande de roulement pré-vulcanisée (9) et sans motif autour de la surface équatoriale (4) de la carcasse (5) ;
vulcaniser le coussin en caoutchouc cru (8) inséré dans le pneumatique (2) entre la carcasse (5) et la bande de roulement (9) ; et
graver un motif sur la bande de roulement (9) enroulée autour de la surface équatoriale (4) de la carcasse (5) après la vulcanisation du pneumatique (2) ;
le procédé de rechapage est **caractérisé en ce que,** lors de la vulcanisation, le pneumatique (2) est maintenu à la pression ambiante et **en ce que** la pression radiale est appliquée mécaniquement sur la bande de roulement (9).

2. Procédé de rechapage à froid selon la revendication 1, dans lequel, lors de la vulcanisation, une pression radiale est appliquée mécaniquement sur la bande de roulement (9) au moyen d'une série de rouleaux de pression (19) qui sont agencés autour du pneumatique (2) et qui sont pressés, avec une force radiale déterminée, contre la bande de roulement (9).

3. Procédé de rechapage à froid selon la revendication 2, dans lequel une station de vulcanisation, dans lequel la vulcanisation du coussin en caoutchouc cru (8) a lieu, comprend :
un corps de support circulaire (15) pourvu d'une pluralité de guides linéaires dirigés radialement (16) ;
une pluralité de glissières (17), dont chacune supporte au moins un rouleau de pression (19) correspondant disposé perpendiculairement au corps de support (15) et qui est monté mobile sur un guide linéaire (16) respectif ; et
un actionneur (20) qui est adapté pour déplacer les glissières (17) le long des guides linéaires (16) respectifs.

4. Procédé de rechapage à froid selon la revendication 2 ou 3, dans lequel au moins un rouleau de pression (19) est motorisé afin de tourner sur lui-même, et donc pour déterminer la rotation du pneumatique (2) lors de la vulcanisation.

5. Procédé de rechapage à froid selon l'une des revendications 1 à 4 et comprenant l'étape supplémentaire de chauffage du coussin en caoutchouc cru (8) avant enroulement du coussin en caoutchouc cru (8) autour de la surface équatoriale (4) de la carcasse (5).

6. Procédé de rechapage à froid selon la revendication 5, dans lequel le coussin en caoutchouc cru (8) est produit au moyen d'un dispositif d'extrusion avant enroulement du coussin en caoutchouc cru (8) autour de la surface équatoriale (4) de la carcasse (5).

7. Procédé de rechapage à froid selon la revendication 5 ou 6, dans lequel le coussin en caoutchouc cru (8) est chauffé à une température comprise entre 70 et 80 °C avant d'enrouler le coussin en caoutchouc cru (8) autour de la surface équatoriale (4) de la carcasse (5).

8. Procédé de rechapage à froid selon l'une des revendications 1 à 7 et comprenant l'étape supplémentaire de chauffage de la bande de roulement (9) avant enroulement de la bande de roulement (9) autour de la surface équatoriale (4) de la carcasse (5).

9. Procédé de rechapage à froid selon la revendication 8, dans lequel, la vulcanisation du coussin en caoutchouc cru (8) n'a lieu que par exploitation de la chaleur contenue dans la bande de roulement (9), c'est-à-dire, lors de la vulcanisation du coussin en caoutchouc cru (8), le pneumatique (2) n'est soumis à aucun chauffage externe.

10. Procédé de rechapage à froid selon la revendication 8 ou 9, dans lequel la bande de roulement (9) est chauffée dans un dispositif de chauffage (13) avant enroulement de la bande de roulement (9) autour de la surface équatoriale (4) de la carcasse (5).

11. Procédé de rechapage à froid selon la revendication 8, 9 ou 10, dans lequel la bande de roulement (9) est chauffée à une température comprise entre 90 et 120 °C avant enroulement de la bande de roulement (9) autour de la surface équatoriale (4) de la carcasse (5).

12. Procédé de rechapage à froid selon l'une des revendications 8 à 11 et comprenant l'étape supplémentaire de vulcanisation de la bande de roulement (9) avant enroulement de la bande de roulement (9) autour de la surface équatoriale (4) de la carcasse (5).

13. Procédé de rechapage à froid selon l'une des revendications 1 à 12 et comprenant l'étape supplémentaire de chauffage de la surface équatoriale (4) de la carcasse (5) avant enroulement du coussin en caoutchouc cru (8) autour de la surface équatoriale (4) de la carcasse (5).

14. Installation de rechapage à froid (1) de pneumatique (2) ; l'installation de rechapage (1) comprend :
un poste de retrait (3) pour un retrait de l'ancienne bande de roulement usée du pneumatique (2) afin d'exposer une surface équatoriale (4) d'une carcasse (5) du pneumatique (2) ;
un poste d'écroûtage (6) pour écroûter la surface équatoriale (4) de la carcasse (5) afin d'éliminer tout dommage local ;
un poste d'enroulement (7) pour enrouler un coussin en caoutchouc cru (8) et une bande de roulement pré-vulcanisée (9) sans motif autour de la surface équatoriale (4) de la carcasse (5) ;
un poste de vulcanisation (10) pour vulcaniser le coussin en caoutchouc cru (8) inséré dans le pneumatique (2) entre la carcasse (5) et la bande de roulement (9) ; et
un poste de gravure (11) pour une gravure d'un motif sur la bande de roulement (9) enroulée autour de la surface équatoriale (4) de la carcasse (5) après la vulcanisation du pneumatique (2) ;
l'installation de rechapage (1) est **caractérisée en ce que** :
pendant la vulcanisation, le poste de vulcanisation (10) maintient le pneumatique (2) à la pression ambiante ; et
le poste de vulcanisation (10) comprend des moyens de pression qui, lors de la vulcanisation, appliquent mécaniquement une pression radiale sur la bande de roulement (9).
